# EUROPEAN PATENT APPLICATION

(11) **EP 3 032 161 A1**
(43) Date of publication of application: **15.06.2016**
(21) Application number: 14197674.6
(22) Date of filing: 12.12.2014
(51) Int. Cl.: F17C 1/00

(54) **Containment system for liquified gases**

(71) Applicant: Shell Internationale Research Maatschappij B.V., 2596 HR Den Haag (NL)
(72) Inventor: SAEED, Muhammas Ahmer, London WC2R 0ZA (GB)
(74) Representative: Matthezing, Robert Maarten

(57) **Abstract**

The invention relates to a containment system for storing and/or transporting a liquefied gas in a spherical cargo tank, which tank is supported by a skirt arrangement mounted on the hull of a marine vessel, wherein the skirt is mounted on the hull structure using a mounting setup that comprises an insulating layer in between the skirt and the inner side of the inner hull.

## Description

### Field of the invention

The invention relates to containment system for storing and/or transporting a liquefied gas and a marine transportation vessel comprising said containment system.

### Background to the invention

Hydrogen is an important industrial gas used in oil refining and fertilizer industries and in several other chemical processes. It is expected that hydrogen may additionally play a significant role as an energy carrier, in particular in the transportation sector.

In general, gases can be transported by means of pressure via pipelines for short distances. For long distances, gases are generally transported by means of marine transportation. In the absence of suitable pipeline networks for gaseous hydrogen, and for importation purposes, it is expected that hydrogen in liquid form will be one of the most effective ways for its supply and distribution. Due to the volumetric gains and to move any meaningful amount of energy economically, gaseous hydrogen may suitably be liquefied and transported in liquid form. One of the most practical ways to distribute hydrogen world-wide is the transportation of liquid hydrogen by marine transportation, i.e. by large ships / tankers. The containment construction on such a ship or tanker must be suitable for the transportation of liquid hydrogen, which has some very specific properties.

Two properties of gases are important in developing methods for their liquefaction: critical temperature and critical pressure. The critical temperature of a gas is the temperature at and above which it cannot be liquefied, no matter how much pressure is applied. The pressure required to liquefy the gas at its critical temperature is called the critical pressure. Differences in critical temperatures amongst gases mean that some gases are easier to liquefy than others. For example, the critical temperature of carbon dioxide is relatively high (31 °C), which means that that it can be liquefied relatively easily at or near room temperature (at critical pressure of about 73 bars). By comparison, the critical temperature of LNG is about -82 °C and the critical pressure is about 45 bars.

It will be understood that depending upon the critical temperatures and pressures certain gases can be liquefied more easily than others at or near ambient temperatures. Especially when the required pressure is relatively small, relatively large pressure vessels can be built which economically allow bulk transportation in liquefied form. In contrast, when high pressures are required for liquefaction, it is challenging to build larger pressure vessels which are still of economical relevance for bulk transportation of the liquefied gas.

During transportation of certain gases, like some Liquid Petroleum Gases (LPG), measures comprising applying in conjunction pressure and refrigeration/cooling are utilized to re-liquefy boil off gas and maintain the liquefied form of the gas. For certain gases, like natural gas, the critical pressure (about 45 bars) is quite high whereas the critical temperature (about -82 °C) is quite low. Generally, such gases are cooled to their normal boiling point and transported at or near ambient temperatures at atmospheric pressure. For example, liquefied natural gas (LNG) is transported at around -163 °C at or near ambient temperatures at atmospheric pressure. Liquid hydrogen needs to be treated similarly. For hydrogen to be in a full liquid state without evaporating at atmospheric pressure, it needs to be cooled to -253 °C.

Tanks for shipping cryogenic liquefied gases at pressures close to atmospheric pressure are known. Such cryogenic containment systems can generally be identified into two main types: membrane containment systems and so-called IMO Type B containment systems. The type of containment system utilized mostly for shipping LNG is the membrane type containment system. In this system membranes are supported by the ships inner hull and the load of the cargo is borne by the inner hull. For the second type of cryogenic containment system a structurally self-supporting or free-standing cargo tank is utilized which is spaced or separated from the ship's inner hull and inner sides. Since such cargo tanks are structurally independent of the ship's hull, the strength of the hull is not relevant for the containment function of the tanks. One design of such an independent IMO Type B cargo containment system utilizes spherical tanks, see e.g. U.S. Patents Nos. 3,677,021 and 3,680,323 (Moss Maritime): spherical tanks have been mounted in the ship hold on a metal cylindrical skirt with the tank bottom located above the ship inner hull.

For efficient transport, it will be required that the temperature of the liquefied gas stored in the cryogenic containment system remains close to the temperature at which it has been loaded. Heat ingress into the containment system will lead to the boiling off of liquefied gas carried and the gas generated will increase the pressure in the tank if not removed from the tanks. Means to manage the Natural Boil Off Gas (NBOG) include utilization in boilers and/or engines, or re-liquefaction. Re-liquefaction however requires very significant amounts of power, and therefore requires the presence of a big electrical generation facility onboard as well. Further, for LNG carriers Dual Fuel Diesel Electric (DFDE) propulsion systems are increasingly used instead of steam turbines, the traditionally used propulsion system of LNG carriers, to improve the fuel efficiencies. Steam turbines have much lower efficiencies than the DFDE's. However, with the use of DFDE's the situation of excessive gas availability becomes a concern on LNG carriers. Reducing boil off rate (BOR) of liquefied gas is therefore desired: currently LNG carriers in service with spherical tanks are guaranteed for 0.15% BOR, however for newly built LNG carriers rates of up to 0.1% are also known. In the new carriers, the containment systems are heavily insulated to prevent heat ingress into the tank. There are two main areas of heat ingress, one from the surroundings and the second through the conduction from the metal skirt arrangement.

The IMO Type B Spherical cargo containment systems are mainly utilized in LNG marine transportation, but such systems can also be considered for carrying other liquefied gases, like liquid hydrogen, liquid nitrogen, liquid oxygen and the like. The carriage of other cargos may however lead to the need of other specific technical requirements. For example, for a cargo of liquid hydrogen an increase of BOR is expected even with increased insulation. The latent heat per volume unit of liquid hydrogen is approximately one seventh of that of LNG. Further, the difference in temperature between the temperature of hydrogen as a liquid (at its normal boiling point) and ambient temperature is close to 1.5 times the comparable temperature difference of LNG. As a result, liquid hydrogen is about ten times easier to evaporate than LNG at the same ambient temperature. This raises the need of finding novel solutions to reduce heat ingress into the hydrogen containment system to keep the BOR within acceptable limits.

In the current design of IMO Type B Spherical cargo containment systems the spherical tank is supported by a so-called skirt arrangement, which is an arrangement mounted on a ship that holds the tank above a ship's hull. Generally, the skirt arrangement is a metal plate welded at the upper part to the peripheral portion of the spherical tank and at the lower part welded to the ship's hull. The skirt arrangement provides rigidity to the hull structure and minimizes the transference of stresses from the hull structure to the tank. See for example US 3,677,021.

The skirt arrangement in the IMO Type B Spherical cargo containment systems further contains a structural transition joint (STJ). The structural transition joint functions as a thermal break, or thermal barrier, which is an element of low thermal conductivity placed in an assembly to reduce or prevent the flow of thermal energy between conductive materials. In the current design of IMO Type B Spherical cargo containment systems the STJ is fitted between aluminum alloy and stainless steel parts of the skirt. The STJ consists generally of four layers: aluminum, titanium, nickel, and stainless steel, connected by explosion bonding/welding. Carbon steel is also used in the system, but only in the part of the skirt where the temperature is high enough (i.e. close to ambient conditions), and where carbon steel can be used satisfactorily. Heat conduction into the tank from the skirt in the current IMO Type B Spherical cargo containment systems is known to be in the region of 20-30% of the total heat ingress into the cargo tank. There is a need to reduce the heat ingress into the tank to the highest extent possible.

### Summary of the invention

The present invention provides means for reducing heat ingress from the skirt region into the cargo tank.

Accordingly, the present invention provides a containment system for storing and/or transporting a liquefied gas in a spherical cargo tank, which tank is supported by a skirt arrangement mounted on the hull of a marine vessel, wherein the skirt is mounted on the hull structure with a mounting setup that comprises an (thermally) insulating layer in between the skirt and the inner side of the inner hull.

With "inner hull" herein is meant the inside part of the hull facing the containment system. The hull usually comprises a system of ballast spaces enclosed by the inner hull and the outer hull (the latter facing the water).

The containment system of the present invention is ideally suited for use in (marine) transportation of liquid hydrogen, but it is understood that technically the present improvement will be equally applicable to containment systems for other cryogenic liquefied gases, such as LNG.

### Brief description of the drawings

In Figure 1(a), a spherical tank cargo containment system according to the prior art is schematically shown. Figure 1(b) shows the direct skirt and hull connection arrangement of the prior art system and Figure 1(c) shows an enlarged view of the STJ.

In Figure 2, a mounting setup for the hull connection according to the present invention is shown.

In Figure 3(a), a further mounting setup for the hull connection according to the present invention is shown and in Figure 3(b) the skirt attachment of that setup is shown slightly enlarged.

In Figure 4, a spherical tank cargo containment system according to this invention is schematically shown having the skirt fully insulated from both the environment and from the hull.

### Detailed description of the invention

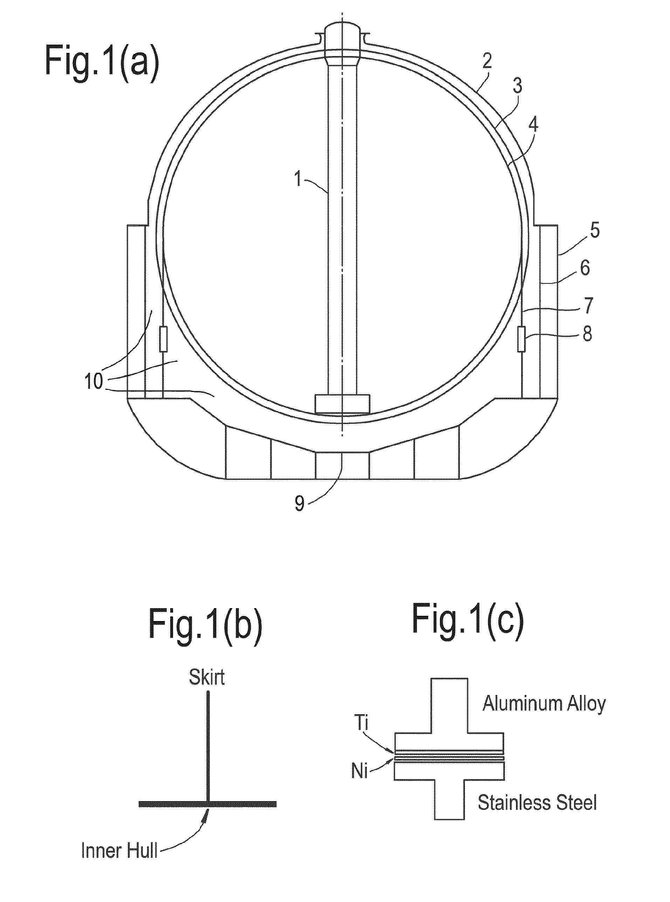

According to the present invention, a new mounting setup is provided for fixing the skirt of a containment system for liquefied gases to the hull of a marine vessel. The new mounting setup reduces the heat ingress into the cargo tank to a significant extent. Instead of the simple welded structure of the prior art (see Fig. 1) a mounting setup is provided having an insulating layer at the interface between the skirt and the hull. This mounting setup reduces the heat ingress from the hull to the cargo tank via the skirt. The mounting setup comprises any arrangement for fixing the skirt to the inner hull that allows the use of insulating material between the skirt and the hull either directly or via any type of base or pedestal arrangement. Preferred mounting setups comprise the use of nuts and bolts, nuts and studs, dowels, and/or any combination thereof.

It is believed that with the present invention, heat transfer via conduction through the skirt will be considerably reduced when compared to the welded structure by at least 10 %, preferably by at least 20 %, more preferred by at least 30 %, particularly at least 40 % and especially in the order of 50-60% when utilizing the mounting setup structure of this invention with appropriate insulating materials.

For qualifying as appropriate insulating materials, these materials will have to comply with the requirement of reduced thermal conductivity when compared to the materials of which the skirt itself is made, but a further preferred additional characteristic is the ability to withstand cryogenic temperatures, and another preferred characteristic is fire resistance. In a further embodiment, the insulation material is resistant to environmental factors, including humidity. Suitable materials for insulation are selected from wood, composites and high density foams. As liquid hydrogen is very light (density of 70 kg/m³) in comparison to other liquefied gases, the total load of hydrogen in a tank of conventional size will be lower than that of other liquefied gases. As a consequence, this may lead to selection of different insulation materials. In an embodiment of the invention, the insulating layer comprises wood, composites, high density foams or a combination of said materials.

In a further embodiment of the invention the mounting setup comprises an insulating washer and/or liner between the head(s) of the bolt (s) /nut (s) /stud (s) /dowel (s) and the insulating material. This provides even better insulation and reduces heat transfer due to conduction. Metal to metal contact from the cold surface to the bolt/stud/dowel either from the top or from the internal part of hull is avoided by using a washer and/or a liner. Insulation materials utilized for the washer and/or liner preferably are selected from PTFE (polytetrafluoroethylene) or injection molded composites, or any other materials which are suitable for use at cryogenic temperatures or any combination of such materials.

According to another embodiment of the invention, in the case that bolts are used in the mounting setup, each bolt is fixed either directly to the inner hull or through a base/pedestal arrangement fixed to the inner hull with a nut at the side opposite to the head of the bolt. In a further embodiment, the inner hull is provided with an additional plate welded at the inner side of the inner hull covering (any) entry points of attachment materials (like bolts/studs) to avoid the entry of stud threads into the ballast spaces of the hull.

The bolts/studs/dowels used in the mounting setup of the present invention are preferably made of materials utilized for cryogenic temperatures such as used in the LNG industry, for example stainless steel of type SUS 304, or alloys like Monel.

In the present containment system the skirt comprises a structural transition joint which acts as a thermal break between the upper and lower part of the skirt. In a further embodiment of the invention, the lower part of the skirt reaching up from the mounting setup (attached to the hull) to the structural transition joint is also provided with an insulating layer to reduce heat ingress from the environment to the skirt. Preferably, such insulating layer is provided at both the inner side and outer side of the skirt. This insulation is deemed to be an extension of the insulation provided in the top part of the skirt in currently known systems.

In still another embodiment, the optionally insulated lower part of the skirt is made of stainless steel or otherwise suitable low temperature steel or alloy steel and the upper part is fully insulated with an insulating layer at both sides of the skirt.

### Detailed description of the drawings

In Figure 1, an example according to the prior art is schematically shown of a spherical tank cargo containment system with a skirt and hull connection arrangement, wherein [1] is a pump tower for housing the cargo pumps and loading and discharging pipelines, [2] a tank cover providing a layer around the outer surface of the tank system for weather protection, [3] a tank insulation layer comprising of panel insulation of polyurethane foam and/or phenolic resin foam or polystyrene foam, to reduce heat ingress from the surroundings, [4] the outer layer of the cargo tank, [5] the ship's hull, wherein [6] is the inner side of the ship's hull, which is double sided, [7] is a tank skirt, through which the tank is mounted on the hull, [8] a structural transition joint (STJ), which is a thermal break between the upper part of the skirt and the lower part of the skirt, which is enlarged in Figure 1(c) to show the layers of different materials (the top part is an aluminum alloy, followed by a titanium layer and a nickel layer, and the lower part is stainless steel), [9] shows the double bottom of the ship's hull structure, which provides a ballast space, and [10] are hold spaces, being empty spaces between the cargo tank and the hull. Further highlighted in Figure 1(b) is the simple attachment of the skirt to the hull, which is a welded structure.

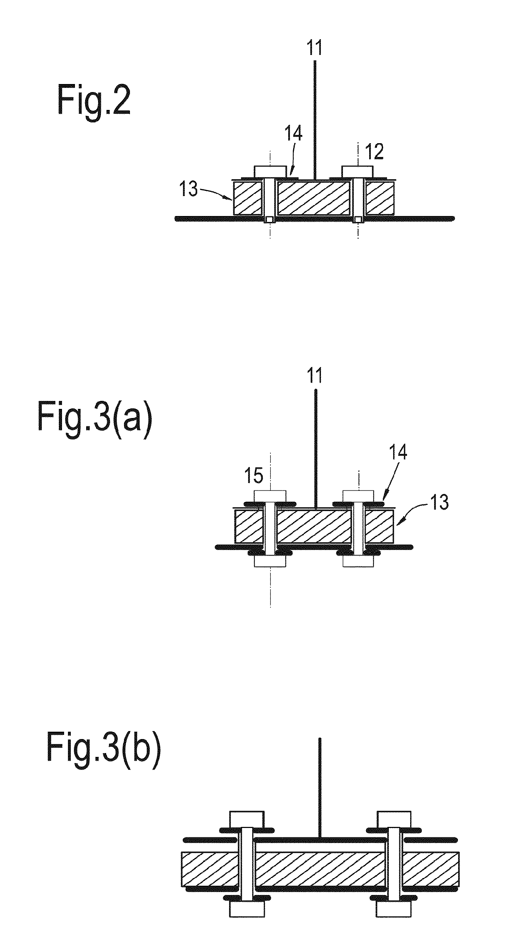

In figure 2, an example of a mounting setup for the hull connection according to the present invention is shown, wherein [11] is the skirt, [12] is a stud/nut arrangement, [13] is the insulating layer and [14] an insulating washer and liner between the heads of the studs and the insulating layer.

Figure 3(a) depicts a mounting setup with an insulating layer [13] and a bolt arrangement [15] of the invention with an insulating washer and liner [14] between the heads of the bolts and the insulating layer, and further the bolts are fixed with nuts. Figure 3(b) shows the setup of Figure 3(a) slightly enlarged, too show the skirt horizontal metal foot which sits on top of the insulation. Bolts pass through holes in the foot of the skirt and also through the insulation and through the pedestal or base.

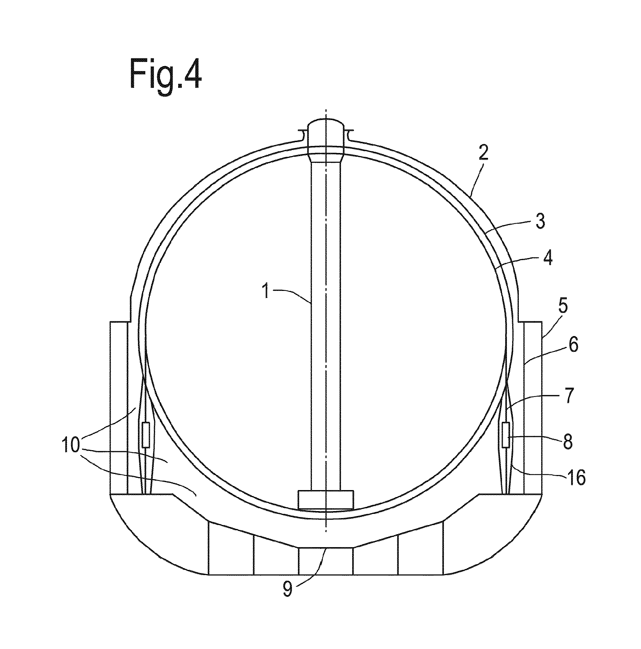

In figure 4, the position of the additional insulating layer at the lower part of the skirt [16] in a containment system according to the invention is indicated. Insulating layers are shown as thick lines around the skirt both at the left hand side and the right hand side of the Figure, fully covering both inside and outside of the skirt.

It is noted that the Figures showing embodiments of the invention should be interpreted as illustration and not as limiting the invention.

## Claims

1. A containment system for storing and/or transporting a liquefied gas in a spherical cargo tank, which tank is supported by a skirt arrangement mounted on the hull of a marine vessel, wherein the skirt is mounted on the hull structure using a mounting setup that comprises an insulating layer in between the skirt and the inner side of the inner hull.

2. A containment system of claim 1, wherein the insulating layer comprises wood, composites, high density foams or a combination of any of these materials.

3. A containment system of claim 1 or 2, wherein the mounting setup comprises nuts and bolts, nuts and studs, dowels, and/or any combination thereof.

4. A containment system of claim 3, wherein the mounting setup further comprises an insulating washer and/or liner between the head(s) of the bolt (s) / nut (s) / stud(s)/ dowel(s) and the insulating material.

5. A containment system of claim 3, wherein the insulation material utilized for the washer and/or liner is selected from polytetrafluoroethylene, injection molded composites, and any other materials which are suitable for use at cryogenic temperatures and any combination thereof.

6. A containment system of any one of the preceding claims, wherein the mounting setup comprises bolts, wherein the bolts are fixed either directly to the inner hull or through a base/pedestal arrangement fixed to the inner hull with a nut at the side opposite to the head of the bolt.

7. A containment system of any one of the preceding claims, wherein the inner hull is provided with an additional plate welded at the inner side of the inner hull and covering entry points of attachment materials.

8. A containment system of any one of the preceding claims, wherein the skirt comprises a structural transition joint (STJ) and the part of the skirt reaching up from the mounting setup (attached to the hull) to the structural transition joint is provided with an insulating layer.

9. A containment system of any one of the preceding claims, wherein the liquefied gas is liquid hydrogen.

10. A containment system of any one preceding claims 1-8, wherein the liquefied gas is LNG.

11. A marine transportation vessel comprising a containment system according to any one of claims 1-9.
